# EUROPEAN PATENT SPECIFICATION

(11) **EP 4 274 266 B1**
(45) Date of publication and mention of the grant of the patent: **22.07.2026**
(21) Application number: 23199652.1
(22) Date of filing: 04.01.2019
(51) Int. Cl.: H04W 4/02

(54) **ELECTRONIC PRICE TAG POSITIONING METHOD, APPARATUS, AND SYSTEM**
VERFAHREN, VORRICHTUNG UND SYSTEM ZUR POSITIONIERUNG ELEKTRONISCHER PREISSCHILDER
PROCÉDÉ, APPAREIL ET SYSTÈME DE POSITIONNEMENT D'ÉTIQUETTE DE PRIX ÉLECTRONIQUE

(30) Priority: 06.06.2018 CN 201810587179
(43) Date of publication of application: 08.11.2023
(62) Divisional of application: 19815902.2
(73) Proprietor: Hanshow Technology Co., Ltd., Jiaxing, Zhejiang 314031 (CN)
(72) Inventor: LIANG, Min, Zhejiang, 314000 (CN); HOU, Shiguo, Zhejiang, 314000 (CN); CHEN, Jun, Zhejiang, 314000 (CN); SHEN, Ming, Zhejiang, 314000 (CN); JIANG, Qi, Zhejiang, 314000 (CN); ZHAO, Yang, Zhejiang, 314000 (CN)
(74) Representative: Boult Wade Tennant LLP

(56) References cited:
- EP-A1- 2 733 503
- US-A1- 2013 281 110
- US-A1- 2017 139 032

## Description

### TECHNICAL FIELD

The present disclosure relates to the field of positioning technology, and in particular to an electronic price tag positioning method, apparatus and system.

### BACKGROUND

The traditional electronic price tag system mainly achieves a function of displaying goods price, and pushes information that needs to be displayed from a core system to an electronic price tag terminal for display. As the supermarket has such business requirements as real-time search for goods, shopping guides and the like, how to position the goods in the supermarket is a topic. Traditional indoor positioning methods include iBeacon (which is a new function equipped with the OS of mobile devices released by Apple Inc. The working mode of iBeacon is that a device equipped with a BLE (Bluetooth Low Energy) wireless communication function uses a BLE technology to send its own unique ID to the surrounding areas, and an application software that receives the ID will take some actions based on the ID), UWB (Ultra Wideband, which is a carrierless communication technology that uses nanosecond to picosecond non-sine wave narrow pulses to transmit data, and which is used in a short-distance high-speed data transmission), WiFi fingerprints, etc. The positioning accuracies of these methods are all above 1m, and even the errors thereof reach 10m, which cannot meet the requirements of dense commodity display positioning. EP2733503A1 discloses a radio frequency positioning system and method, in which "one or a plurality of mobile tags exchange information with one or a plurality of location tags with fixed locations to generate information comprising formation for determining a location of the mobile tag. Then, information about the location tag or the mobile tag is directly transmitted to a reader located in a center of a locating area in a long-distance transmission manner, then to a management computer, thereby achieving the locating of the mobile tag".

### SUMMARY

Embodiments of the present disclosure provide an electronic price tag positioning method, apparatus and system. Location information of an electronic price tag whose location is unknown can be determined through a neighborhood relationship among the electronic price tags and an electronic price tag whose location is known, which thus can improve positioning accuracy.
The invention is defined by the subject matter of the independent claims.
Advantageous enhancements are set out in the dependent claims.

### BRIEF DESCRIPTION OF DRAWINGS

To illustrate more clearly the embodiments of the present disclosure or the technical schemes of the prior art, a brief description of the accompanying drawings in the embodiments or the prior art will be given below. Obviously, the accompanying drawings described below are only some embodiments described in this disclosure. For those of ordinary skill in the art, other drawings can also be obtained without any creative labor from these drawings.
FIG. 1 is a block diagram of an electronic price tag positioning system provided in the present disclosure;
FIG. 2 is a flowchart of an electronic price tag positioning method provided in the present disclosure;
FIG. 3 is a block diagram of an electronic price tag positioning apparatus provided in the present disclosure; and
FIG. 4 is a flowchart of a method for positioning an electronic price tag using an electronic price tag positioning system provided in the present disclosure.

### DESCRIPTION OF EMBODIMENTS

Hereinafter the technical solution in the embodiments of the present disclosure will be described clearly and integrally in combination with the accompanying drawings in the embodiments of the present disclosure, and obviously the described embodiments are merely part of the embodiments, rather than all of the embodiments. Any other embodiment obtained by those skilled in the art based on the embodiments of the present disclosure without paying any creative labor fall within the protection scope of the present disclosure.

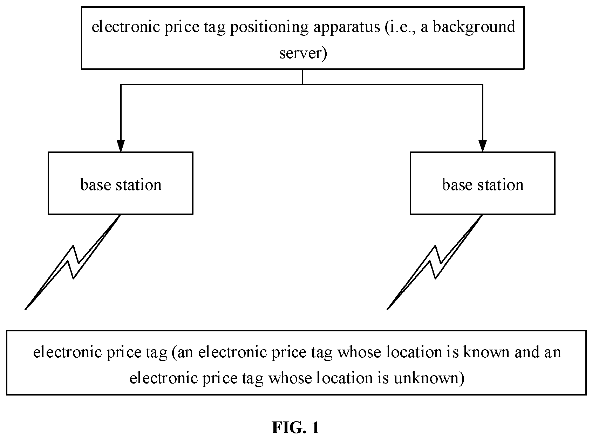

In an embodiment of the present disclosure, an electronic price tag positioning system is provided. As shown in FIG. 1, the system comprises an electronic price tag positioning apparatus (ie, a background server), a base station, and an electronic price tag.

Herein, the electronic price tag includes an electronic price tag whose location is known and an electronic price tag whose location is unknown. Generally, there is one electronic price tag whose location is known in each shelf, and the number of the electronic price tag whose location is unknown depends on how many types of goods there are.

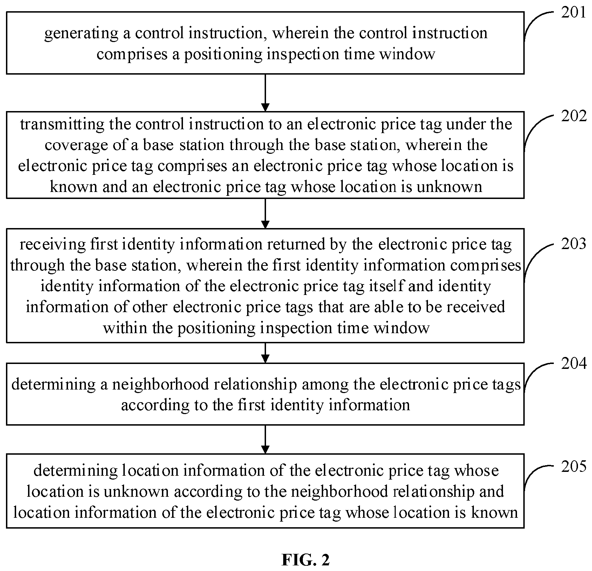

The electronic price tag positioning apparatus implements the positioning of the electronic price tag according to the method flow shown in FIG. 2, and the electronic price tag positioning method comprises:
a step 201 of generating a control instruction, wherein the control instruction comprises a positioning inspection time window;
a step 202 of transmitting the control instruction to an electronic price tag under the coverage of a base station through the base station, wherein the electronic price tag comprises an electronic price tag whose location is known and an electronic price tag whose location is unknown;
a step 203 of receiving first identity information returned by the electronic price tag through the base station, wherein the first identity information comprises identity information of the electronic price tag itself and identity information of other electronic price tags that are able to be received within the positioning inspection time window;
a step 204 of determining a neighborhood relationship among the electronic price tags according to the first identity information;
a step 205 of determining location information of the electronic price tag whose location is unknown according to the neighborhood relationship and location information of the electronic price tag whose location is known.

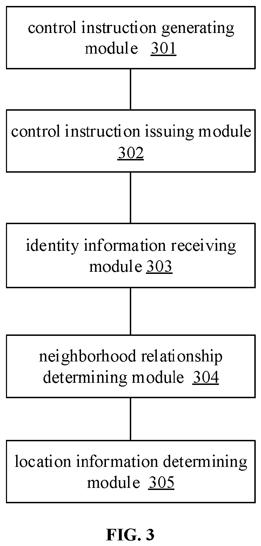

From the perspective of the electronic price tag positioning apparatus itself, the electronic price tag positioning apparatus may include several modules as shown in FIG. 3 as below:
a control instruction generating module 301 for generating a control instruction, wherein the control instruction comprises a positioning inspection time window;
a control instruction issuing module 302 for transmitting the control instruction to an electronic price tag under the coverage of a base station through the base station, wherein the electronic price tag comprises an electronic price tag whose location is known and an electronic price tag whose location is unknown;
an identity information receiving module 303 for receiving first identity information returned by the electronic price tag through the base station, wherein the first identity information comprises identity information of the electronic price tag itself and identity information of other electronic price tags that are able to be received within the positioning inspection time window;
a neighborhood relationship determining module 304 for determining a neighborhood relationship among the electronic price tags according to the first identity information;
a location information determining module 305 for determining location information of the electronic price tag whose location is unknown according to the neighborhood relationship and location information of the electronic price tag whose location is known.

As used above, the term "unit" or "module" can realize a combination of software and/or hardware with predetermined functions. Although preferably the apparatus described in the above embodiments is implemented by software, implementation by hardware or a combination of software and hardware is also possible and conceivable.

In the embodiments of the present disclosure, due to the wireless communication protocol of the electronic price tag on 2.4GHz, the conventional practice is that a radio frequency module of the electronic price tag automatically wakes up every other time period to monitor whether there is a communication request. If there is a communication request, then it is practicable to enter the data transmission mode for data reception, then to execute or store the received instructions and data. If the base station device communicating with the radio frequency module intends to communicate with a certain electronic price tag, the electronic price tag needs to be awakened at first for a period longer than a monitoring period of the electronic price tag, and then the instruction and data are transmitted. In this case, the control instruction generated by the step 201 or the control instruction generating module 301 needs to include a positioning inspection time window, which may be 4s to 16s. The electronic price tag needs to transmit its own identity information within the positioning inspection time window, and performs reception in other time except transmission of its own identity information, and records the identity information transmitted by other electronic price tags.

In order to prevent conflicts in transmission moments of a large number of electronic price tags, all electronic price tags in the present disclosure will adopt an automatic avoidance rule to transmit their own identity information in staggered time slots. The automatic avoidance rule is, for example, the ID of the electronic price tag * a basic time offset.

In the embodiments of the present disclosure, the control instruction may also include a wireless channel and power used by the electronic price tag for transmitting the identity information. The control instruction aims to determine that 90% of the electronic price tag transmits a signal in a coverage less than 50 cm under this configuration. Then the step 202 or the control instruction issuing module 302 will transmit the control instruction to all electronic price tags under the coverage of the base station. The electronic price tag will transmit its own identity information according to the wireless channel and power. Specifically, the electronic price tag will transmit its own identity information repeatedly at a certain cycle and low power. When the electronic price tag does not transmit its own identity information, it will record the identity information of other electronic price tags (the electronic price tag whose location is known and the electronic price tag whose location is unknown) that can be correctly received.

Transmitting the control instruction itself does not depend on whether or not geographic location information of the electronic price tag is specifically known, but only depends on it is known which base station device can receive the signal of the electronic price tag logically, and then the control instruction can be transmitted by the corresponding base station device communicating with the electronic price tag.

In the embodiments of the present disclosure, the received information will be returned to the electronic price tag positioning apparatus through the base station after the positioning inspection time window ends, and at this time, the control instruction may also include an information return time window. Also in order to prevent conflicts in transmission moments of a large number of electronic price tags, all electronic price tags will use an automatic avoidance rule within the information return time window to return the first identity information (that is, their own identity information and identity information of other electronic price tags that are able to be received) in staggered time slots. Also the automatic avoidance rule is, for example, the ID of the electronic price tag * a basic time offset.

In the embodiments of the present disclosure, after the electronic price tag returns the first identity information, the electronic price tag positioning apparatus executes the step 203 or activates the identity information receiving module 303, receives the first identity information that is returned by the electronic price tag through the base station within the information return time window, then executes the step 204 or activates an identity information receiving module 304, and determines the neighborhood relationship among the electronic price tags according to the first identity information. The neighborhood relationship is determined in the following manner: if an electronic price tag can receive the identity information transmitted by other electronic price tags within the positioning inspection time window, the electronic price tag and these corresponding electronic price tags constitute a neighborhood relationship.

Then, after the neighborhood relationship is determined according to the first identity information returned by all the electronic price tags, a neighborhood relationship network is built. Then the electronic price tag positioning apparatus executes the step 205 or activates an identity information receiving module 305 to determine location information of the electronic price tag whose location is unknown according to the neighborhood relationship and the location information of the electronic price tag whose location is known.

The location information can be determined by calculating a connection relationship between each electronic price tag whose location is unknown and the nearest several electronic price tags whose location is known according to the neighborhood relationship, which may be one hop or multiple hops, and finally the position of the electronic price tag whose location is unknown can be obtained according to the weighted average of the known locations of the nearest several electronic price tags whose location is known that the electronic price tag whose location is unknown can reach.

For example, the electronic price tag whose location is unknown is C1, and the electronic price tag whose location is known is D1. C1 can directly receive the identity information of D1, then C1 can reach D1 by one hop, and the location information of C1 can be the location information of D1.

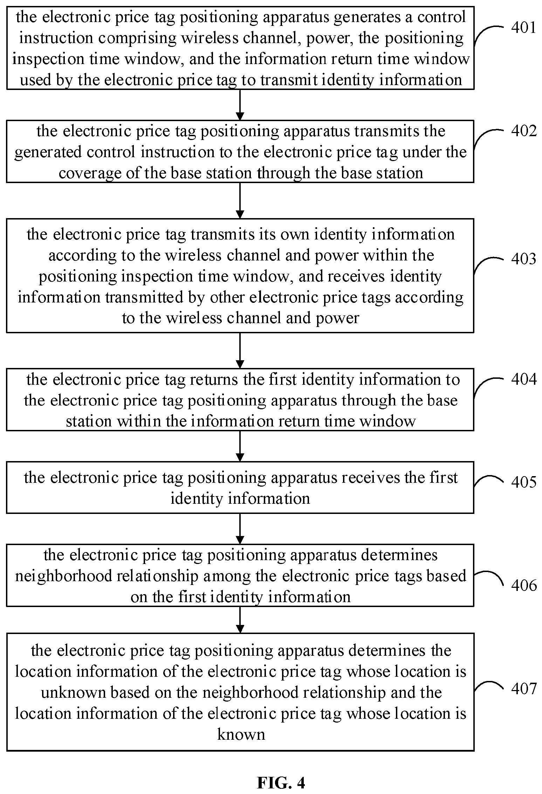

In the embodiments of the present disclosure, from the perspective of the electronic price tag positioning system as a whole, the electronic price tag positioning method can be implemented by the following steps, as shown in FIG. 4, comprising:
a step 401: the electronic price tag positioning apparatus generates a control instruction comprising a wireless channel, power, a positioning inspection time window, and a information return time window used by the electronic price tag to transmit identity information;
a step 402: the electronic price tag positioning apparatus transmits the generated control instruction to the electronic price tag under the coverage of the base station through the base station;
a step 403: the electronic price tag transmits its own identity information according to the wireless channel and the power within the positioning inspection time window, and receives identity information transmitted by other electronic price tags according to the wireless channel and power;
a step 404: the electronic price tag returns the first identity information to the electronic price tag positioning apparatus through the base station within the information return time window;
a step 405: the electronic price tag positioning apparatus receives the first identity information;
a step 406: the electronic price tag positioning apparatus determines a neighborhood relationship among the electronic price tags according to the first identity information;
a step 407: the electronic price tag positioning apparatus determines the location information of the electronic price tag whose location is unknown according to the neighborhood relationship and the location information of the electronic price tag whose location is known.

In addition, when a certain shelf is changed, the position of a shelf electronic price tag corresponding to the shelf is changed as well, so how to determine the position of the shelf electronic price tag. Since a distance between two shelf electronic price tags is longer than a distance between the electronic price tags on the shelves, the wireless channel and power in the above-mentioned control instruction can be changed and set as the communication channel and communication frequency between the shelf electronic price tags. In this way, the position of the shelf electronic price tag whose position is changed can be determined through shelf electronic price tags at different positions. With this configuration parameter (i.e. wireless channel, power), a transmission signal coverage distance of the shelf electronic price tag is 2 to 5 meters.

In an embodiment of the present disclosure, there is further provided a computer device comprising a memory, a processor and a computer program stored on the memory and executable by the processor, and the processor implements, when executing the computer program, the electronic price tag positioning method as described above.

In an embodiment of the present disclosure, there is further provided a computer readable storage medium storing therein a computer program for executing the electronic price tag positioning method as described above.

In summary, the present disclosure uses the features of the electronic price tag wireless communication system itself to locate the price tag, that is, to determine the location information of the electronic price tag whose location is unknown through the neighborhood relationship among the electronic price tags and the electronic price tag whose location is known, thereby improving the positioning accuracy to below 50cm.

Persons skilled in the art shall understand that, the embodiments of the present disclosure can be provided as a method, a system or a computer program product. Therefore, the present disclosure can adopt the forms of a full hardware example, a full software example, or combination of a software example and a hardware example. Moreover, the present disclosure can adopt the form of a computer program product that is implemented on one or more computer-usable storage medium (comprising but not limited to a disk memory, a CD-ROM, an optical memory, and etc.) comprising computer-usable program codes.

The present disclosure is described with reference to flow diagrams and/or block diagrams of the method, the device (system) and the computer program product according to the embodiment of the present disclosure. It should be understood that each flow and/or block in the flow diagrams and/or block diagrams, and the combination of the flows and/or blocks in the flow diagrams and/or block diagrams can be achieved by computer program commands. These computer program commands can be provided to a CPU of a general-purpose computer, a special-purpose computer, an embedded processor or other programmable data processing device to produce a machine, so that a device for achieving functions designated in one or more flows in the flow diagrams and/or one or more blocks in the block diagrams can be generated by the command executed by the CPU of the computer or other programmable data processing device.

These computer program instructions can also be stored in a computer-readable memory that can guide a computer or other programmable data processing device to operate in a special way, so that the instruction stored in the computer-readable memory generates a manufactured product comprising a instruction device which achieves functions designated in one or more flows in the flow diagrams and/or one or more blocks in the block diagrams.

These computer program instructions can also be loaded on a computer or other programmable data processing device, on which a series of operation steps are executed to generate processing achieved by the computer, so that the instruction executed on the computer or other programmable data processing device is provided for being used in the steps of achieving functions designated in one or more flows in the flow diagrams and/or one or more blocks in the block diagrams.

The foregoing is merely a preferred embodiment of the present disclosure and is not intended to limit the present disclosure, and various modifications and variations can be made to the embodiment of the present disclosure by those skilled in the art.

## Claims

1. An electronic price tag positioning method, **characterized by** comprising the steps of:
building, by an electronic price tag positioning apparatus, a neighbor relationship network of electronic price tags according to first identity information of all of the electronic price tags under coverage of a base station, wherein the electronic price tags comprise electronic price tags whose location are known and electronic price tags whose location are unknown, and the first identity information comprises identity information of an electronic price tag itself and identity information of other electronic price tags that are received by the electronic price tag; and
obtaining, by the electronic price tag positioning apparatus, according to the neighbor relationship network, a connection relationship from an electronic price tag whose location is unknown via one or more hops to one or more electronic price tags whose location are known, and determining location information of the electronic price tag whose location is unknown according to the connection relationship and location information of the one or more electronic price tags whose location are known.

2. The electronic price tag positioning method according to claim 1, wherein the step of determining the location information of the electronic price tag whose location is unknown according to the location information of the one or more electronic price tags whose location are known comprises:
determining the location information of the electronic price tag whose location is unknown by performing weighted averaging on the location information of the one or more electronic price tags whose location are known.

3. The electronic price tag positioning method according to claim 1, wherein before building the neighbor relationship network of the electronic price tags, the electronic price tag positioning method further comprises the steps of:
generating (201), by the electronic price tag positioning apparatus, a control instruction, wherein the control instruction comprises an information return time window for the electronic price tags to return the first identity information.

4. The electronic price tag positioning method according to claim 3, wherein the control instruction further comprises a positioning inspection time window for the electronic price tag to receive the identity information of the other electronic price tags; and
the electronic price tag positioning method further comprises the steps of:
after generating the control instruction, transmitting (202), by the electronic price tag positioning apparatus, the control instruction to the electronic price tags through the base station; and
receiving (203), by the electronic price tag positioning apparatus, the first identity information returned by the electronic price tags through the base station.

5. The electronic price tag positioning method according to claim 3, wherein the control instruction further comprises a wireless channel and power used by the electronic price tags for transmitting the identity information, and
the first identity information comprises:
the identity information of the electronic price tag itself and the identity information transmitted in accordance with the wireless channel and the power by the other electronic price tags.

6. An electronic price tag positioning apparatus, **characterized by** comprising:
a neighborhood relationship determining module (304), configured to build a neighbor relationship network of electronic price tags according to first identity information of all of the electronic price tags under coverage of a base station, wherein the electronic price tags comprise electronic price tags whose location are known and electronic price tags whose location are unknown, and the first identity information comprises identity information of an electronic price tag itself and identity information of other electronic tags that are received by the electronic price tag; and
a location information determining module (305), configured to obtain, according to the neighbor relationship network, a connection relationship from an electronic price tag whose location is unknown via one or more hops to one or more electronic price tags whose location are known, and determine location information of the electronic price tag whose location is unknown according to location information of the one or more electronic price tags whose location are known.

7. The electronic price tag positioning apparatus according to claim 6, wherein the location information determining module determining the location information of the electronic price tag whose location is unknown, comprises:
the location information determining module determines the location information of the electronic price tag whose location is unknown by performing weighted averaging on the location information of the one or more electronic price tags whose location are known.

8. The electronic price tag positioning apparatus according to claim 6, comprising:
a control instruction generating module (301), configured to generate a control instruction, wherein the control instruction comprises an information return time window for the electronic price tags to return the first identity information.

9. The electronic price tag positioning apparatus according to claim 8, wherein the control instruction further comprises a positioning inspection time window for the electronic price tag to receive the identity information of the other electronic price tags; and
the electronic price tag positioning apparatus further comprises:
a control instruction issuing module (302), configured to transmit the control instruction to the electronic price tags through the base station, after the generation of the control instruction; and
an identity information receiving module (303), configured to receive the first identity information returned by the electronic price tags through the base station.

10. The electronic price tag positioning apparatus according to claim 8, wherein the control instruction further comprises a wireless channel and power used by the electronic price tags for transmitting the identity information; and
the first identity information comprises:
the identity information of the electronic price tag itself and the identity information transmitted in accordance with the wireless channel and the power by the other electronic price tags.

11. An electronic price tag positioning system, **characterized by** comprising: an electronic price tag positioning apparatus as claimed in claim 6, a base station, and electronic price tags, wherein the electronic price tags comprise electronic price tags whose location are known and electronic price tags whose location ae unknown;
wherein the electronic price tags are configured to: return first identity information through the base station, wherein the first identity information comprises identity information of an electronic price tag itself and identity information of other electronic price tags that are received by the electronic price tag; and
the electronic price tag positioning apparatus is configured to:
receive the first identity information;
build a neighbor relationship network of the electronic price tags according to the first identity information of all of the electronic price tags under the coverage of a base station; and
obtain, according to the neighbor relationship network, a connection relationship from an electronic price tag whose location is unknown via one or more hops to one or more electronic price tags whose location are known, and determine location information of the electronic price tag whose location is unknown according to location information of the one or more electronic price tags whose location are known.

12. The electronic price tag positioning system according to claim 11, wherein determining the location information of the electronic price tag whose location is unknown according to the location information of the one or more electronic price tags whose location are known comprises:
determining the location information of the electronic price tag whose location is unknown by performing weighted averaging on the location information of the one or more electronic price tags whose location are known.

13. The electronic price tag positioning system according to claim 11, wherein before receiving the first identity information, the electronic price tag positioning apparatus is further configured to:
generate a control instruction, wherein the control instruction comprises an information return time window for the electronic price tags to return the first identity information.

14. The electronic price tag positioning system according to claim 13, wherein the control instruction further comprises a positioning inspection time window for the electronic price tag to receive the identity information of the other electronic price tags; and
the electronic price tag positioning apparatus is further configured to:
transmit the control instruction to the electronic price tags through the base station after the generation of the control instruction.

15. A computer readable storage medium, **characterized by** storing therein a computer program for executing the electronic price tag positioning method according to any one of claims 1 to 5.

## Patentansprüche

1. Elektronisches Preisschild-Positionierungsverfahren, **dadurch gekennzeichnet, dass** es die folgenden Schritte umfasst:
Aufbauen, durch eine elektronische Preisschild-Positionierungseinrichtung, eines Nachbarschaftsbeziehungsnetzwerks von elektronischen Preisschildern gemäß ersten Identitätsinformationen aller elektronischen Preisschilder unter Abdeckung einer Basisstation, wobei die elektronischen Preisschilder elektronische Preisschilder, deren Ort bekannt ist, und elektronische Preisschilder, deren Ort unbekannt ist, umfassen, und die ersten Identitätsinformationen die Identitätsinformationen eines elektronischen Preisschilds selbst und die Identitätsinformationen anderer elektronischer Preisschilder, die durch das elektronische Preisschild empfangen werden, umfassen; und
Erhalten, durch die elektronische Preisschild-Positionierungseinrichtung, gemäß dem Nachbarschaftsbeziehungsnetzwerk, einer Verbindungsbeziehung von einem elektronischen Preisschild, dessen Ort unbekannt ist, über einen oder mehrere Sprünge zu einem oder mehreren elektronischen Preisschildern, deren Ort bekannt ist, und Bestimmen von Ortsinformationen des elektronischen Preisschilds, dessen Ort unbekannt ist, gemäß der Verbindungsbeziehung und den Ortsinformationen des einen oder der mehreren elektronischen Preisschilder, deren Ort bekannt ist.

2. Elektronisches Preisschild-Positionierungsverfahren nach Anspruch 1, wobei der Schritt des Bestimmens der Ortsinformationen des elektronischen Preisschilds, dessen Ort unbekannt ist, gemäß den Ortsinformationen des einen oder der mehreren elektronischen Preisschilder, deren Ort bekannt ist, Folgendes umfasst:
Bestimmen der Ortsinformationen des elektronischen Preisschilds, dessen Ort unbekannt ist, durch Durchführen einer gewichteten Mittelwertbildung an den Ortsinformationen des einen oder der mehreren elektronischen Preisschilder, deren Ort bekannt ist.

3. Elektronisches Preisschild-Positionierungsverfahren nach Anspruch 1, wobei vor dem Aufbauen des Nachbarschaftsbeziehungsnetzwerks der elektronischen Preisschilder das elektronische Preisschild-Positionierungsverfahren weiter die folgenden Schritte umfasst:
Erzeugen (201), durch die elektronische Preisschild-Positionierungseinrichtung, einer Steueranweisung, wobei die Steueranweisung ein Informationsrücklauf-Zeitfenster für die elektronischen Preisschilder zum Zurückgeben der ersten Identitätsinformationen umfasst.

4. Elektronisches Preisschild-Positionierungsverfahren nach Anspruch 3, wobei die Steueranweisung weiter ein Positionierungsinspektion-Zeitfenster umfasst, damit das elektronische Preisschild die Identitätsinformationen der anderen elektronischen Preisschilder empfängt; und
das elektronische Preisschild-Positionierungsverfahren weiter die folgenden Schritte umfasst:
nach dem Erzeugen der Steueranweisung Übermitteln (202), durch die elektronische Preisschild-Positionierungseinrichtung, der Steueranweisung an die elektronischen Preisschilder durch die Basisstation; und
Empfangen (203), durch die elektronische Preisschild-Positionierungseinrichtung, der ersten Identitätsinformationen, die von den elektronischen Preisschildern durch die Basisstation zurückgegeben wird.

5. Elektronisches Preisschild-Positionierungsverfahren nach Anspruch 3, wobei die Steueranweisung weiter einen drahtlosen Kanal und eine von den elektronischen Preisschildern verwendete Leistung zum Übertragen der Identitätsinformationen umfasst, und
die ersten Identitätsinformationen Folgendes umfassen:
die Identitätsinformationen des elektronischen Preisschilds selbst und die Identitätsinformationen, die gemäß dem Funkkanal und der Leistung von den anderen elektronischen Preisschildern übertragen werden.

6. Elektronische Preisschild-Positionierungseinrichtung, **dadurch gekennzeichnet, dass** sie Folgendes umfasst:
ein Nachbarschaftsbeziehung-Bestimmungsmodul (304), das dafür konfiguriert ist, ein Nachbarschaftsbeziehungsnetzwerk von elektronischen Preisschildern gemäß den ersten Identitätsinformationen aller elektronischen Preisschilder unter Abdeckung einer Basisstation aufzubauen, wobei die elektronischen Preisschilder elektronische Preisschilder, deren Ort bekannt ist, und elektronische Preisschilder, deren Ort unbekannt ist, umfassen, und die ersten Identitätsinformationen die Identitätsinformationen eines elektronischen Preisschilds selbst und die Identitätsinformationen anderer elektronischer Preisschilder, die durch das elektronische Preisschild empfangen werden, umfassen; und
ein Ortsinformation-Bestimmungsmodul (305), das dafür konfiguriert ist, gemäß dem Nachbarbeziehungsnetzwerk, eine Verbindungsbeziehung von einem elektronischen Preisschild, dessen Ort unbekannt ist, über einen oder mehrere Sprünge zu einem oder mehreren elektronischen Preisschildern, deren Ort bekannt ist, zu erhalten und Ortsinformationen des elektronischen Preisschilds, dessen Ort unbekannt ist, gemäß den Ortsinformationen des einen oder der mehreren elektronischen Preisschilder, deren Ort bekannt ist, zu bestimmen.

7. Elektronische Preisschild-Positionierungseinrichtung nach Anspruch 6, wobei, dass das Ortsinformation-Bestimmungsmodul die Ortsinformationen des elektronischen Preisschilds bestimmt, dessen Ort unbekannt ist, Folgendes umfasst:
das Ortsinformation-Bestimmungsmodul bestimmt die Ortsinformationen des elektronischen Preisschilds, dessen Ort unbekannt ist, durch Durchführen einer gewichteten Mittelwertbildung an den Ortsinformationen des einen oder der mehreren elektronischen Preisschilder, deren Ort bekannt ist.

8. Elektronische Preisschild-Positionierungseinrichtung nach Anspruch 6, umfassend:
ein Steueranweisung-Erzeugungsmodul (301), das dafür konfiguriert ist, eine Steueranweisung zu erzeugen, wobei die Steueranweisung ein Informationsrücklauf-Zeitfenster für die elektronischen Preisschilder umfasst, um die erste Identitätsinformation zurückzugeben.

9. Elektronische Preisschild-Positionierungseinrichtung nach Anspruch 8, wobei die Steueranweisung weiter ein Positionierungsinspektion-Zeitfenster umfasst, damit das elektronische Preisschild die Identitätsinformationen der anderen elektronischen Preisschilder empfängt; und
die elektronische Preisschild-Positionierungseinrichtung weiter Folgendes umfasst:
ein Steueranweisung-Ausgabemodul (302), das dafür konfiguriert ist, die Steueranweisung, nach dem Erzeugen der Steueranweisung, durch die Basisstation an die elektronischen Preisschilder zu übermitteln; und
ein Identitätsinformation-Empfangsmodul (303), das dafür konfiguriert ist, die ersten Identitätsinformationen, die von den elektronischen Preisschildern durch die Basisstation zurückgegeben werden, zu empfangen.

10. Elektronische Preisschild-Positionierungseinrichtung nach Anspruch 8, wobei die Steueranweisung weiter einen drahtlosen Kanal und eine von den elektronischen Preisschildern verwendete Leistung zum Übertragen der Identitätsinformationen umfasst; und
die ersten Identitätsinformationen Folgendes umfassen:
die Identitätsinformationen des elektronischen Preisschilds selbst und die Identitätsinformationen, die gemäß dem Funkkanal und der Leistung von den anderen elektronischen Preisschildern übertragen werden.

11. Elektronisches Preisschild-Positionierungssystem, **dadurch gekennzeichnet, dass** es Folgendes umfasst: eine elektronische Preisschild-Positionierungseinrichtung nach Anspruch 6, eine Basisstation und elektronische Preisschilder, wobei die elektronischen Preisschilder elektronische Preisschilder, deren Ort bekannt ist, und elektronische Preisschilder, deren Ort unbekannt ist, umfassen;
wobei die elektronischen Preisschilder zu Folgendem konfiguriert sind: erste Identitätsinformationen durch die Basisstation zurückzugeben, wobei die ersten Identitätsinformationen die Identitätsinformationen des elektronischen Preisschilds selbst und die Identitätsinformationen anderer elektronischer Preisschilder, die durch das elektronische Preisschild empfangen werden, umfassen; und
die elektronische Preisschild-Positionierungseinrichtung zu Folgendem konfiguriert ist:
die ersten Identitätsinformationen zu empfangen;
ein Nachbarschaftsbeziehungsnetzwerk der elektronischen Preisschilder gemäß den ersten Identitätsinformationen aller elektronischen Preisschilder unter Abdeckung einer Basisstation aufzubauen; und
gemäß dem Nachbarbeziehungsnetzwerk eine Verbindungsbeziehung von einem elektronischen Preisschild, dessen Ort unbekannt ist, über einen oder mehrere Sprünge zu einem oder mehreren elektronischen Preisschildern, deren Ort bekannt ist, zu erhalten und die Ortsinformationen des elektronischen Preisschilds, dessen Ort unbekannt ist, gemäß den Ortsinformationen des einen oder der mehreren elektronischen Preisschilder, deren Ort bekannt ist, zu bestimmen.

12. Elektronisches Preisschild-Positionierungssystem nach Anspruch 11, wobei Bestimmen der Ortsinformationen des elektronischen Preisschilds, dessen Ort unbekannt ist, gemäß den Ortsinformationen des einen oder der mehreren elektronischen Preisschilder, deren Ort bekannt ist, Folgendes umfasst:
Bestimmen der Ortsinformationen des elektronischen Preisschilds, dessen Ort unbekannt ist, durch Durchführen einer gewichteten Mittelwertbildung an den Ortsinformationen des einen oder der mehreren elektronischen Preisschilder, deren Ort bekannt ist.

13. Elektronisches Preisschild-Positionierungssystem nach Anspruch 11, wobei die elektronische Preisschild-Positionierungseinrichtung vor dem Empfangen der ersten Identitätsinformationen weiter zu Folgendem konfiguriert ist:
eine Steueranweisung zu erzeugen, wobei die Steueranweisung ein Informationsrücklauf-Zeitfenster für die elektronischen Preisschilder zum Zurückgeben der ersten Identitätsinformationen umfasst.

14. Elektronisches Preisschild-Positionierungssystem nach Anspruch 13, wobei die Steueranweisung weiter ein Positionierungsinspektion-Zeitfenster umfasst, damit das elektronische Preisschild die Identitätsinformationen der anderen elektronischen Preisschilder empfängt; und
die elektronische Preisschild-Positionierungseinrichtung weiter zu Folgendem konfiguriert ist:
Übermitteln der Steueranweisung an die elektronischen Preisschilder durch die Basisstation nach der Erzeugung der Steueranweisung.

15. Computerlesbares Speichermedium, **dadurch gekennzeichnet, dass** es darin ein Computerprogramm zum Ausführen des elektronischen Preisschild-Positionierungsverfahrens nach einem der Ansprüche 1 bis 5 speichert.

## Revendications

1. Procédé de positionnement d'étiquette de prix électronique, **caractérisé en ce qu'**il comprend les étapes de :
construction, au moyen d'un appareil de positionnement d'étiquette de prix électronique, d'un réseau de relations de voisinage d'étiquettes électroniques de prix en fonction de premières informations d'identification de toutes les étiquettes de prix électroniques couvertes par une station de base, dans lequel les étiquettes de prix électroniques comprennent des étiquettes de prix électroniques dont l'emplacement est connu et des étiquettes de prix électroniques dont l'emplacement est inconnu, et les premières informations d'identification comprennent des informations d'identification d'une étiquette de prix électronique elle-même et les informations d'identification d'autres étiquettes de prix électroniques qui sont reçues par l'étiquette de prix électronique ; et
obtention, au moyen de l'appareil de positionnement d'étiquette de prix électronique, selon le réseau de relations de voisinage, d'une relation de connexion entre une étiquette de prix électronique dont l'emplacement est inconnu via un ou plusieurs sauts à une ou plusieurs étiquettes de prix électroniques dont l'emplacement est connu, et détermination d'informations d'emplacement de l'étiquette de prix électronique dont l'emplacement est inconnu en fonction de la relation de connexion et d'informations d'emplacement des une ou plusieurs étiquettes de prix électroniques dont l'emplacement est connu.

2. Procédé de positionnement d'étiquette de prix électronique selon la revendication 1, dans lequel l'étape de détermination des informations d'emplacement de l'étiquette de prix électronique dont l'emplacement est inconnu selon les informations d'emplacement des une ou plusieurs étiquettes de prix électroniques dont l'emplacement est connu, comprend :
la détermination des informations d'emplacement de l'étiquette de prix électronique dont l'emplacement est inconnu en effectuant une moyenne pondérée sur les informations d'emplacement des une ou plusieurs étiquettes de prix électroniques dont l'emplacement est connu.

3. Procédé de positionnement d'étiquette de prix électronique selon la revendication 1, dans lequel, avant de construire le réseau de relations de voisinage des étiquettes de prix électroniques, le procédé de positionnement d'étiquette de prix électronique comprend en outre les étapes de :
génération (201), au moyen de l'appareil de positionnement d'étiquette de prix électronique, d'une instruction de commande, dans lequel l'instruction de commande comprend une fenêtre de temps de retour d'information permettant aux étiquettes de prix électroniques de retourner les premières informations d'identification.

4. Procédé de positionnement d'étiquette de prix électronique selon la revendication 3, dans lequel l'instruction de commande comprend en outre une fenêtre de temps d'inspection de positionnement permettant à l'étiquette de prix électronique de recevoir les informations d'identification des autres étiquettes de prix électroniques ; et
le procédé de positionnement d'étiquette de prix électronique comprend en outre les étapes de :
après avoir généré l'instruction de commande, transmission (202), par l'appareil de positionnement d'étiquette de prix électronique, de l'instruction de commande aux étiquettes de prix électroniques via la station de base ; et
réception (203), par l'appareil de positionnement d'étiquette de prix électronique, des premières informations d'identification retournées par les étiquettes de prix électroniques via la station de base.

5. Procédé de positionnement d'étiquette de prix électronique selon la revendication 3, dans lequel l'instruction de commande comprend en outre un canal et une alimentation sans fil utilisés par les étiquettes de prix électroniques pour transmettre les informations d'identification, et
les premières informations d'identification comprennent :
les informations d'identification de l'étiquette de prix électronique elle-même et les informations d'identification transmises conformément au canal sans fil et à l'alimentation par les autres étiquettes de prix électroniques.

6. Appareil de positionnement d'étiquette électronique, **caractérisé en ce qu'**il comprend :
un module de détermination de relations de voisinage (304), configurée pour construire un réseau de relations de voisinage d'étiquettes électroniques de prix en fonction de premières informations d'identification de toutes les étiquettes de prix électroniques couvertes par une station de base, dans lequel les étiquettes de prix électroniques comprennent des étiquettes de prix électroniques dont l'emplacement est connu et des étiquettes de prix électroniques dont l'emplacement est inconnu, et les premières informations d'identification comprennent des informations d'identification d'une étiquette de prix électronique elle-même et les informations d'identification d'autres étiquettes électroniques qui sont reçues par l'étiquette de prix électronique ; et
un module de détermination d'informations d'emplacement (305), configuré pour obtenir, selon le réseau de relations de voisinage, une relation de connexion entre une étiquette de prix électronique dont l'emplacement est inconnu via un ou plusieurs sauts à une ou plusieurs étiquettes de prix électroniques dont l'emplacement est connu, et déterminer des informations d'emplacement de l'étiquette de prix électronique dont l'emplacement est inconnu en fonction des informations d'emplacement des une ou plusieurs étiquettes de prix électroniques dont l'emplacement est connu.

7. Appareil de positionnement d'étiquette de prix électronique selon la revendication 6, dans lequel le module de détermination d'informations d'emplacement déterminant les informations d'emplacement de l'étiquette de prix électronique dont l'emplacement est inconnu, comprend :
le module de détermination d'informations d'emplacement détermine les informations d'emplacement de l'étiquette de prix électronique dont l'emplacement est inconnu en effectuant une moyenne pondérée sur les informations d'emplacement des une ou plusieurs étiquettes de prix électroniques dont l'emplacement est connu.

8. Appareil de positionnement d'étiquette de prix électronique selon la revendication 6, comprenant :
un module de génération d'instructions de commande (301), configuré pour générer une instruction de commande, dans lequel l'instruction de commande comprend une fenêtre de temps de retour d'informations permettant aux étiquettes de prix électroniques de renvoyer les premières informations d'identification.

9. Appareil de positionnement d'étiquette de prix électronique selon la revendication 8, dans lequel l'instruction de commande comprend en outre une fenêtre de temps d'inspection de positionnement permettant à l'étiquette de prix électronique de recevoir les informations d'identification des autres étiquettes de prix électroniques ; et
l'appareil de positionnement d'étiquette de prix électronique comprend en outre :
un module d'émission d'instruction de commande (302), configuré pour transmettre l'instruction de commande aux étiquettes de prix électroniques via la station de base, après la génération de l'instruction de commande ; et
un module de réception d'informations d'identification (303), configuré pour recevoir les premières informations d'identification renvoyées par les étiquettes de prix électroniques via la station de base.

10. Appareil de positionnement d'étiquette de prix électronique selon la revendication 8, dans lequel l'instruction de commande comprend en outre un canal et une alimentation sans fil utilisés par les étiquettes de prix électroniques pour transmettre les informations d'identification, et
les premières informations d'identification comprennent :
les informations d'identification de l'étiquette de prix électronique elle-même et les informations d'identification transmises conformément au canal sans fil et à l'alimentation par les autres étiquettes de prix électroniques.

11. Système de positionnement d'étiquette de prix électronique, **caractérisé en ce qu'**il comprend : un appareil de positionnement d'étiquette de prix électronique tel que revendiqué dans la revendication 6, une station de base et des étiquettes de prix électroniques, dans lequel les étiquettes de prix électroniques comprennent des étiquettes de prix électroniques dont l'emplacement est connu et des étiquettes de prix électroniques dont l'emplacement est inconnu ;
dans lequel les étiquettes de prix électroniques sont configurées pour : retourner des premières informations d'identification via la station de base, dans lequel les premières informations d'identification comprennent des informations d'identification de l'étiquette de prix électronique elle-même et des informations d'identification d'autres étiquettes de prix électroniques reçues par l'étiquette de prix électronique ; et
l'appareil de positionnement d'étiquette électronique est configuré pour :
recevoir les premières informations d'identification ;
construire un réseau de relations de voisinage des étiquettes de prix électroniques en fonction des premières informations d'identification de toutes les étiquettes de prix électroniques couvertes par une station de base ; et
obtenir, selon le réseau de relations de voisinage, une relation de connexion entre une étiquette de prix électronique dont l'emplacement est inconnu via un ou plusieurs sauts à une ou plusieurs étiquettes de prix électroniques dont l'emplacement est connu, et déterminer des informations d'emplacement de l'étiquette de prix électronique dont l'emplacement est inconnu en fonction des informations d'emplacement des une ou plusieurs étiquettes de prix électroniques dont l'emplacement est connu.

12. Système de positionnement d'étiquette de prix électronique selon la revendication 11, dans lequel la détermination des informations d'emplacement de l'étiquette de prix électronique dont l'emplacement est inconnu selon les informations d'emplacement des une ou plusieurs étiquettes de prix électroniques dont l'emplacement est connu, comprend :
la détermination des informations d'emplacement de l'étiquette de prix électronique dont l'emplacement est inconnu en effectuant une moyenne pondérée sur les informations d'emplacement des une ou plusieurs étiquettes de prix électroniques dont l'emplacement est connu.

13. Système de positionnement d'étiquette de prix électronique selon la revendication 11, dans lequel, avant de recevoir les premières informations d'identification, l'appareil de positionnement d'étiquette de prix électronique est en outre configuré pour :
générer une instruction de commande, dans lequel l'instruction de commande comprend une fenêtre de temps de retour d'informations permettant aux étiquettes de prix électroniques de renvoyer les premières informations d'identification.

14. Système de positionnement d'étiquette de prix électronique selon la revendication 13, dans lequel l'instruction de commande comprend en outre une fenêtre de temps d'inspection de positionnement permettant à l'étiquette de prix électronique de recevoir les informations d'identification des autres étiquettes de prix électroniques ; et
l'appareil de positionnement d'étiquette électronique est en outre configuré pour :
transmettre l'instruction de commande aux étiquettes de prix électroniques via la station de base après la génération de l'instruction de commande.

15. Support de stockage lisible par ordinateur, **caractérisé par** le stockage d'un programme informatique pour exécuter le procédé de positionnement d'étiquette de prix électronique selon l'une quelconque des revendications 1 à 5.
